# EUROPEAN PATENT SPECIFICATION

(11) **EP 3 031 232 B1**
(45) Date of publication and mention of the grant of the patent: **04.04.2018**
(21) Application number: 13890914.8
(22) Date of filing: 08.08.2013
(51) Int. Cl.: H04W 24/10

(54) **METHODS, APPARATUSES, AND COMPUTER-READABLE STORAGE MEDIA FOR INTER-FREQUENCY SMALL CELL DETECTION AND REPORTING**
VERFAHREN, VORRICHTUNGEN UND COMPUTERLESBARES SPEICHERMEDIUM FÜR INTERFREQUENZ-KLEINZELLENERKENNUNG UND MELDUNG
PROCÉDÉS, APPAREILS ET SUPPORTS DE STOCKAGE LISIBLES PAR ORDINATEUR DE DÉTECTION INTER-FRÉQUENCE DE PETITE CELLULE ET DE COMPTE-RENDU

(43) Date of publication of application: 15.06.2016
(73) Proprietor: Nokia Technologies Oy, 02610 Espoo (FI)
(72) Inventor: ZHANG, Yuantao, Beijing 100012 (CN); ZHANG, Zhi, Beijing 100176 (CN); SHU, Kodo, Beijing 100016 (CN)
(74) Representative: Ruuskanen, Juha-Pekka
(86) International application number: PCT/CN2013/081068
(87) International publication number: WO 2015/018025

(56) References cited:
- CN-A- 102 948 202
- US-A1- 2010 159 950
- NOKIA SIEMENS NETWORKS ET AL: "Background search for small cell detection", 3GPP DRAFT; R2-123102 BACKGROUND_SMALL_CELL_SEARCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Prague, Czech Republic; 20120521 - 20120525, 24 May 2012 (2012-05-24), XP050607523, [retrieved on 2012-05-24]
- PANASONIC: "Discussion on small cell discovery issues", 3GPP DRAFT; R1-132142, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Fukuoka, Japan; 20130520 - 20130524 11 May 2013 (2013-05-11), XP050697918, Retrieved from the Internet: URL:http://www.3gpp.org/ftp/tsg_ran/WG1_RL 1/TSGR1_73/Docs/ [retrieved on 2013-05-11]
- RAPPORTEUR (NOKIA CORPORATION): "[81bis#17][LTE/Het-Net] Inter-frequency measurements (Nokia)", 3GPP DRAFT; R2-131897 EMAIL DISCUSSION REPORT FOR INTER-FREQUENCY MEASUREMENTS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. RAN WG2, no. Fukuoka, Japan; 20130520 - 20130524 10 May 2013 (2013-05-10), XP050699927, Retrieved from the Internet: URL:http://www.3gpp.org/ftp/tsg_ran/WG2_RL 2/TSGR2_82/Docs/ [retrieved on 2013-05-10]
- LG ELECTRONICS INC: "Autonomous search function based small cell discovery", 3GPP DRAFT; R2-132066 AUTONOMOUS SEARCH FUNCTION BASED SMALL CELL DISCOVERY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CE , vol. RAN WG2, no. Fukuoka, Japan; 20130520 - 20130524 11 May 2013 (2013-05-11), XP050700149, Retrieved from the Internet: URL:http://www.3gpp.org/ftp/tsg_ran/WG2_RL 2/TSGR2_82/Docs/ [retrieved on 2013-05-11]

## Description

### TECHNICAL FIELD

This invention relates generally to wireless communications and, more specifically, to methods, apparatuses, and computer readable storage media for inter-frequency small cell detection and reporting.

### BACKGROUND

This section is intended to provide a background or context to the invention disclosed below. The description herein may include concepts that could be pursued, but are not necessarily ones that have been previously conceived, implemented or described. Therefore, unless otherwise explicitly indicated herein, what is described in this section is not prior art to the description in this application and is not admitted to be prior art by inclusion in this section.

The inter-frequency cell measurement procedures set forth in the current Long Term Evolution (LTE) specification includes cell identification (ID) detection, as well as related Reference Signal Receive Power (RSRP)/Reference Signal Receive Quality (RSRQ) measurement and reporting. The cell ID is detected by a user equipment (UE) over a Primary Synchronization Signal (PSS) or a Secondary Synchronization Signal (SSS). The PSS or SSS is transmitted every five milliseconds, for example, in SF #0 and SF #5 in each frame. The RSRP/RSRQ is measured by the UE over Cell Specific Reference Signals (CRS) within a measurement bandwidth and a measurement period.

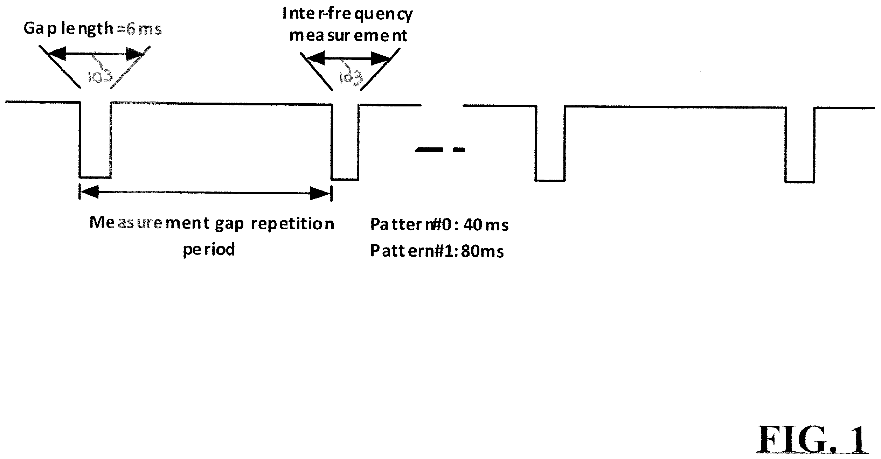

FIG. 1 is a timing diagram illustrating exemplary gaps during which synchronization signal detection and reference signal measurements may be performed. According to an inter-frequency scheme defined in 3GPP TS 36.133 v c.0.0, two possible measurement gap patterns may be configured by an Evolved Node B (eNB), each with a gap length of six milliseconds. In a first pattern designated as pattern#0, a gap 103 occurs every 40 milliseconds, whereas in a second pattern designated as pattern#1, the gap 103 occurs every 80 milliseconds as shown in FIG. 1. The UE turns its RF transceiver to the measured frequency during the gap 103 and therefore cannot receive any data signals from, or transmit any data signals to, the eNB. Accordingly, there is a tradeoff between the first and second gap patterns. The 40-millisecond gap of the first pattern provides a comparatively shorter cell identification latency, but a greater interruption in data transmission and reception, as compared to the 80 millisecond gap of the second pattern.

Release 12 of the LTE standard supports a small cell scenario wherein a Macro cell and a small cell within the coverage area of the Macro cell each deploy different carrier frequencies. Illustratively, the Macro cell and the small cell may be time-synchronized based upon network listening. However, in order to perform an offloading or a handover, the UE must perform inter-frequency measurements. Existing inter-frequency small cell discovery processes May be insufficient for providing adequate opportunities for small cell offloading. Moreover, the interruption time for the UE performing inter-frequency measurements may be undesirably lengthy, thereby restricting downlink (DL)/uplink (UL) scheduling flexibility. NOKIA SIEMENS NETWORKS ET AL: "Background search for small cell detection", 3GPP DRAFT; R2-123102 BACKGROUND_SMALL_CELL_SEARCH, 3RD GENERATION PARTNERSHIP PROJECT (3GPP), MOBILE COMPETENCE CENTRE; 650, ROUTE DES LUCIOLES, F-06921 SOPHIA-ANTIPOLIS CEDEX; FRANCE, vol. RAN WG2, no. Prague , Czech Republic, 20120521-20120525, 24 May 2012 (2012-05-24), describes an inter-frequency small cell detection solution, for example for the purpose of a small cell offload use case.

### SUMMARY

According to one embodiment of the invention, a method comprises receiving a first measurement setting for synchronization signal detection, and receiving a second measurement setting for radio resource management measurement. The first measurement setting includes a first gap length and a first measurement gap repetition period, and the second measurement setting includes a second gap length and a second measurement gap repetition period. Synchronization detection is performed using the first measurement setting. In response to an inter-frequency small cell being detected, a feedback indication is provided on an indication channel. In response to the inter-frequency small cell being detected, radio resource management measurement is performed according to the second measurement setting. In this embodiment, the first gap length is shorter than the second gap length.

According to another embodiment of the invention, a method comprises transmitting a first measurement setting for synchronization signal detection and transmitting a second measurement setting for radio resource management measurement. The first measurement setting includes a first gap length and a first measurement gap repetition period, and the second measurement setting includes a second gap length and a second measurement gap repetition period. A feedback indication signal is received which is provided in response to an inter-frequency small cell being detected. In this embodiment, the first gap length is shorter than the second gap length.

According to another embodiment, an apparatus comprises at least one processor, and at least one memory including computer program code for one or more computer programs, the at least one memory and the computer program code configured to, with the at least one processor, cause, at least in part, the apparatus to receive a first measurement setting for synchronization signal detection, and to receive a second measurement setting for radio resource management measurement. The first measurement setting includes a first gap length and a first measurement gap repetition period, and the second measurement setting includes a second gap length and a second measurement gap repetition period. Synchronization detection is performed using the first measurement setting. In response to an inter-frequency small cell being detected, a feedback indication is provided on an indication channel. In response to the inter-frequency small cell being detected, radio resource management measurement is then performed according to the second measurement setting. In this embodiment, the first gap length is shorter than the second gap length.

According to another embodiment, an apparatus comprises at least one processor, and at least one memory including computer program code for one or more computer programs, the at least one memory and the computer program code configured to, with the at least one processor, cause, at least in part, the apparatus to transmit a first measurement setting for synchronization signal detection, and to transmit a second measurement setting for radio resource management measurement. The first measurement setting includes a first gap length and a first measurement gap repetition period, and the second measurement setting includes a second gap length and a second measurement gap repetition period. A feedback indication signal is received which is provided in response to an inter-frequency small cell being detected. In this embodiment, the first gap length is shorter than the second gap length.

According to another embodiment, a computer-readable storage medium carries one or more sequences of one or more instructions which, when executed by one or more processors, cause, at least in part, an apparatus to receive a first measurement setting for synchronization signal detection, and to receive a second measurement setting for radio resource management measurement. The first measurement setting includes a first gap length and a first measurement gap repetition period, and the second measurement setting includes a second gap length and a second measurement gap repetition period. Synchronization detection is performed using the first measurement setting. In response to an inter-frequency small cell being detected, a feedback indication is provided on an indication channel. In response to the inter-frequency small cell being detected radio resource management measurement is then performed according to the second measurement setting. In this embodiment, the first gap length is shorter than the second gap length.

According to another embodiment, a computer-readable storage medium carries one or more sequences of one or more instructions which, when executed by one or more processors, cause, at least in part, an apparatus to transmit a first measurement setting for synchronization signal detection, and to transmit a second measurement setting for radio resource management measurement. The first measurement setting includes a first gap length and a first measurement gap repetition period, and the second measurement setting includes a second gap length and a second measurement gap repetition period. A feedback indication signal is received which is provided in response to an inter-frequency small cell being detected. In this embodiment, the first gap length is shorter than the second gap length.

According to another embodiment, an apparatus comprises means for processing and/or facilitating a processing of receiving a first measurement setting for synchronization signal detection, and receiving a second measurement setting for radio resource management measurement. The first measurement setting includes a first gap length and a first measurement gap repetition period, and the second measurement setting includes a second gap length and a second measurement gap repetition period. Synchronization detection is performed using the first measurement setting. In response to an inter-frequency small cell being detected, a feedback indication is provided on an indication channel. In response to the inter-frequency small cell being detected, radio resource management measurement is performed according to the second measurement setting. In this embodiment, the first gap length is shorter than the second gap length

According to another embodiment, an apparatus comprises means for processing and/or facilitating a processing of transmitting a first measurement setting for synchronization signal detection and transmitting a second measurement setting for radio resource management measurement. The first measurement setting includes a first gap length and a first measurement gap repetition period, and the second measurement setting includes a second gap length and a second measurement gap repetition period. A feedback indication signal is received which is provided in response to an inter-frequency small cell being detected. In this embodiment, the first gap length is shorter than the second gap length.
Preferable embodiments are set forth in the dependent claims.

In addition, for various example embodiments of the invention, the following is applicable: a method comprising facilitating a processing of and/or processing (1) data and/or (2) information and/or (3) at least one signal, the (1) data and/or (2) information and/or (3) at least one signal based, at least in part, on (or derived at least in part from) any one or any combination of methods (or processes) disclosed in this application as relevant to any embodiment of the invention.

For various example embodiments of the invention, the following is also applicable: a method comprising facilitating access to at least one interface configured to allow access to at least one service, the at least one service configured to perform any one or any combination of network or service provider methods (or processes) disclosed in this application.

For various exemplary embodiments of the invention, the following is also applicable: a method comprising facilitating creating and/or facilitating modifying (1) at least one device user interface element and/or (2) at least one device user interface functionality, the (1) at least one device user interface element and/or (2) at least one device user interface functionality based, at least in part, on data and/or information resulting from one or any combination of methods or processes disclosed in this application as relevant to any embodiment of the invention, and/or at least one signal resulting from one or any combination of methods (or processes) disclosed in this application as relevant to any embodiment of the invention.

For various example embodiments of the invention, the following is also applicable: a method comprising creating and/or modifying (1) at least one device user interface element and/or (2) at least one device user interface functionality, the (1) at least one device user interface element and/or (2) at least one device user interface functionality based at least in part on data and/or information resulting from one or any combination of methods (or processes) disclosed in this application as relevant to any embodiment of the invention, and/or at least one signal resulting from one or any combination of methods (or processes) disclosed in this application as relevant to any embodiment of the invention.

In various example embodiments, the methods (or processes) can be accomplished on the service provider side or on the mobile device side or in any shared way between service provider and mobile device with actions being performed on both sides. For various example embodiments, the following is applicable: An apparatus comprising means for performing the method of any of the originally filed method claims included herewith.

Still other aspects, features, technical effects, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the scope of the invention. Accordingly, the drawings and description are to be regarded as illustrative in nature, and not as restrictive.

### BRIEF DESCRIPTION OF THE DRAWINGS

In the attached Figures:
FIG. 1 is a timing diagram illustrating exemplary gaps during which synchronization signal detection and reference signal measurements may be performed;
FIG. 2 is a block diagram of a network operating according to a set of exemplary embodiments of the present invention;
FIG. 3 is a flowchart illustrating a process according to a set of exemplary embodiments of the present invention;
FIG. 4 is a timing diagram illustrating use of a first gap length and a first gap repetition period for synchronization signal detection, and a second gap length and a second gap repetition period for reference signal measurements according to a set of exemplary embodiments of the present invention;
FIG. 5 is a timing diagram illustrating configuration of a measurement gap repetition period and a gap length transition for synchronization signal detection and reference signal measurements according to a set of exemplary embodiments of the present invention;
FIG. 6 is a data structure diagram showing user equipment processes in a subframe with any of the switching gaps shown in FIGs. 4 or 5;
FIG. 7 is a data structure diagram showing user equipment processes in a subframe during reference signal measurements with any of the switching gaps shown in FIGs. 4 or 5; and
FIG. 8 is a block diagram illustrating elements for carrying out a set of exemplary embodiments of the present invention.

### DESCRIPTION OF SOME EMBODIMENTS

Examples of a method, apparatus, and computer program product for performing inter-frequency small cell detection and reporting are disclosed. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

A generalized inter-frequency scheme for small cells is defined in Third Generation Partnership Project (3GPP) Technical Standard (TS) 36.133 v c.0.0. Essentially, two possible measurement gap patterns may be configured by an evolved Node B (eNB), each with a gap length of 6ms. In a first pattern designated as pattern#0, the measurement gap occurs every 40ms, while in a second pattern designated as pattern#1, the measurement gap occurs every 80ms. A user equipment (UE) will feed back a detected cell ID and corresponding measured reference signal receiving power (RSRP)/ reference signal receiving quality (RSRQ) through a radio resource management (RRC) measurement report when a UE-specific event is triggered.

According to TS 36.133 v c.0.0, the measurement gap, as well as the measurement pattern, are the same for cell ID detection and RSRP/RSRQ measurements. However, in order to increase the opportunity for offloading traffic to small cells, it may be possible to accelerate the inter-frequency small cell discovery process, as will be discussed in greater detail hereinafter. Likewise, it may be possible to reduce the interruption time for the UE engaged in inter-frequency measurements, so as to thereby reduce a corresponding downlink (DL)/uplink (UL) scheduling restriction for these UEs, as will also be discussed in greater detail hereinafter.

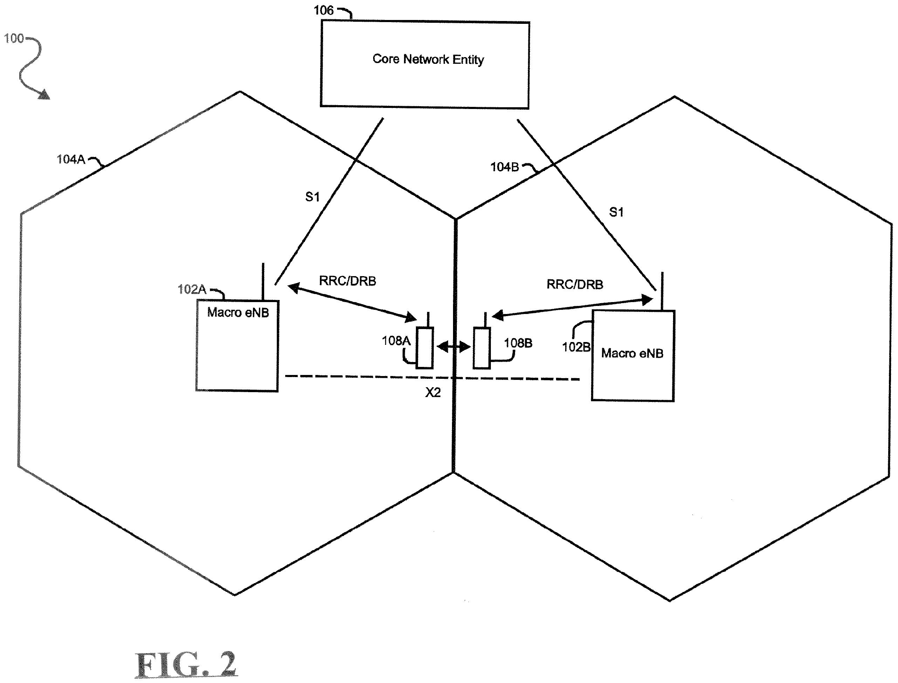

FIG. 2 is a block diagram of a network operating according to a set of exemplary embodiments of the present invention. More specifically, FIG. 2 illustrates a cellular wireless network 100 comprising base stations suitably implemented as Macro eNBs 102A and 102B, defining Macro cells 104A and 104B, respectively. The Macro eNBs 102A and 102B suitably communicate with one another over an X2 connection and also communicate through S1 connections with a network entity such as a core network entity (CN) 106 The core network entity may include elements such as a mobility management entity (MME). The Macro eNB 102A serves a UE 108A. The Macro eNB 102B serves a UE 108B. Each of the respective Macro eNBs 102A, 102B serves its corresponding UE 108A, 108B through radio resource management (RRC) in the control plane and data radio bearer (DRB) in the user plane.

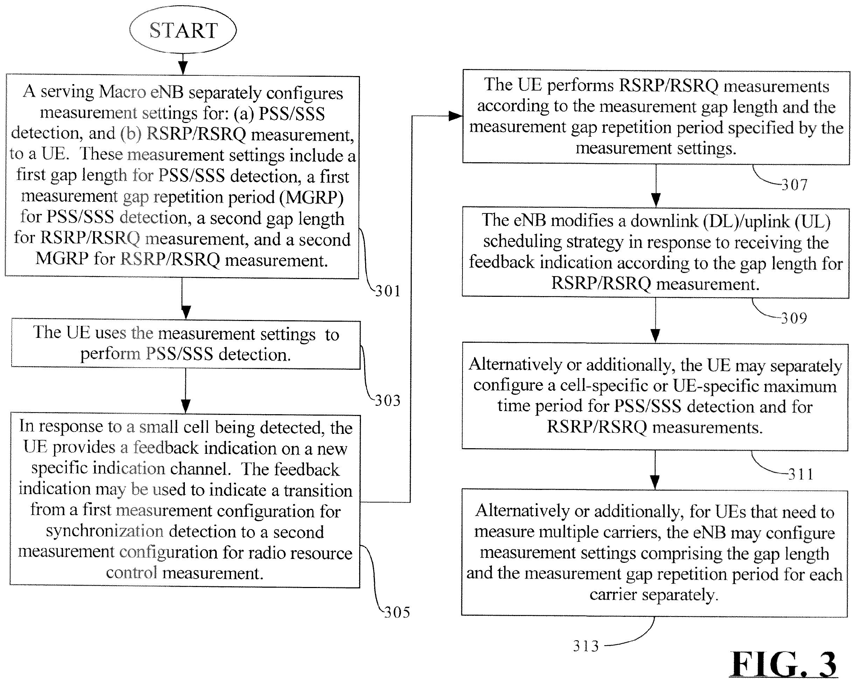

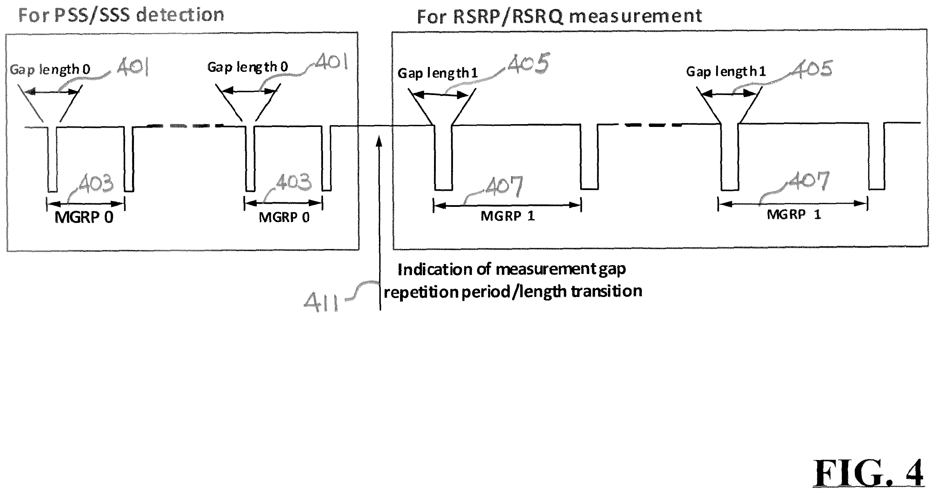

FIG. 3 is a flow chart illustrating a process according to a set of exemplary embodiments of the present invention, and FIG. 4 is a timing diagram illustrating a first gap length and a first gap repetition period for synchronization signal detection, and a second gap length and a second gap repetition period for reference signal measurements according to the procedure of FIG. 3. The operational sequence of FIG. 3 commences at block 301 where a serving Macro eNB, such as eNB 102A (FIG. 2), separately configures measurement settings for: (a) Primary Synchronization Signal (PSS)/Secondary Synchronization Signal (SSS) detection, and (b) RSRP/RSRQ measurement, to a UE, such as UE 108A (FIG. 2). These measurement settings include a first gap length 401 (FIG. 4) for PSS/SSS detection, a first measurement gap repetition period (MGRP) 403 for PSS/SSS detection, a second gap length 405 for RSRP/RSRQ measurement, and a second MGRP 407 for RSRP/RSRQ measurement.

The first and second gap lengths 401, 405, respectively, and the first and second MGRPs 403, 407, respectively, are employed by the UE 108A for performing a small cell identification procedure. At block 303 (FIG. 3), the UE uses the measurement settings (for example, the first gap length 401 (FIG. 4) and the first measurement gap repetition period (MGRP) 403) to perform PSS/SSS detection. At block 305 (FIG. 3), in response to a small cell being detected, the UE provides a feedback indication (for example, one bit) on a new specific indication channel. This feedback indication is shown in FIG. 4 as an indication of measurement gap repetition period/length transition 411. The feedback indication may occur in a fixed subframe of each frame.

The feedback indication may be used to indicate a transition from a first measurement configuration to a second measurement configuration, wherein the first measurement configuration comprises synchronization detection (for example, PSS/SSS detection and the second measurement configuration comprises radio resource management measurement (for example, RSRP/RSRQ measurement). For purposes of illustration, this synchronization detection may comprise detecting a cell identifier over a primary synchronization signal or a secondary synchronization signal.

The UE then performs RSRP/RSRQ measurements according to the measurement gap length and the measurement gap repetition period specified by the measurement settings (block 307), which in the example of FIG. 4 comprises the second gap length 405 and the second MGRP 407. The eNB modifies a downlink (DL)/uplink (UL) scheduling strategy in response to receiving the feedback indication according to the gap length (for example, the second gap length 405 (FIG. 4)) for RSRP/RSRQ measurement (FIG. 3, block 309). Alternatively or additionally, the UE may separately configure a cell-specific or UE-specific maximum time period for PSS/SSS detection and for RSRP/RSRQ measurements (block 311). Alternatively or additionally, for UEs that need to measure multiple carriers, the eNB may configure measurement settings comprising the gap length and the measurement gap repetition period for each carrier separately (block 313). Compared with the conventional scheme of using a 6-ms measurement gap and a 40-ms or 80-ms measurement gap repetition period, the process of FIG. 3 may provide any of the following technical effects: Faster small cell detection due to a shorter PSS/SSS measurement gap and period, as well as reduced interruption time, due to the shorter PSS/SSS measurement gap.

In the example of FIG. 4, the first gap length 401 and the first MGRP 403 are used for PSS/SSS detection, and the second gap length 405 and the second MGRP 407 are used for RSRP/RSRQ measurement. The first gap length 401 and the first MGRP 403 may be configured to the UE separately from the second gap length 405 and the second MGRP 407 for the purpose of performing inter-frequency small cell identification. The first gap length 401 and the first MGRP 403 configured for PSS/SSS detection may be determined by the accuracy of synchronization between a Macro cell 104A or 104B (FIG. 2) and a measured small cell, and alternatively or additionally, may also be determined by the length of time required by the RF transceivers in UEs 108A, 108B to change from one frequency to another. Assume, for example, that the required RF switching time to go from one frequency to another is 0.5ms. Thus, the first gap length 401 for PSS may be 2 milliseconds (ms), and the first MGRP 403 may be 20ms, or perhaps 10ms,

According to a further set of embodiments of the invention, a unified measurement setting is received for synchronization signal detection and radio resource management measurement. The measurement setting includes a shorter gap length which is shorter than that specified in standard specification TS 36.133 v c.0.0, as well as a shorter MGRP which is shorter than that specified in standard specification TS 36.133 v c.0.0. For purposes of illustration, the measurement setting includes a shorter gap length of less than 6 ms and preferably 1 ms or less, and a shorter measurement gap repetition period of less than 20 ms and preferably 10 ms or less.

The unified measurement setting may be utilized for PSS/SSS detection, or for RSRP/RSRQ measurement, or for both PSS/SSS detection and RSRP/RSRQ measurement. For example, a first unified measurement setting may be configured for synchronization detection and a second unified measurement setting may be configured for RSRP/RSRQ measurement. As used herein, the terms "shorter gap length" and "shorter MGRP" are defined as set forth in the immediately preceding paragraph. For PSS/SSS detection, any of the following may be performed: (A) use the shorter gap length for PSS/SSS detection, and keep a non-shortened MGRP for PSS/SSS detection; or (B) use the shorter gap length for PSS/SSS detection, and also use the shorter MGRP for PSS/SSS detection. Likewise, for RSRP/RSRQ measurement, any of the following may be performed: (C) use the shorter gap length for RSRP/RSRQ measurement and a non-shortened MGRP for RSRP/RSRQ measurement; or (D) use the shorter gap length for RSRP/RSRQ measurement and the shorter MGRP for RSRP/RSRQ measurement. Thus, any of four possible configurations for PSS/SSS detection and RSRP/RSRQ measurement may be implemented as follows. A first configuration performs (A) and (C), a second configuration performs (A) and (D), a third configuration performs (B) and (C), and a fourth configuration performs (B) and (D). From such measurement settings, the gap length for PSS/SSS detection may be shorter than the gap length for RSRP/RSRQ measurement. The gap repetition period for PSS/SSS detection may be shorter than the measurement gap repetition period for RSRP/RSRQ measurement.

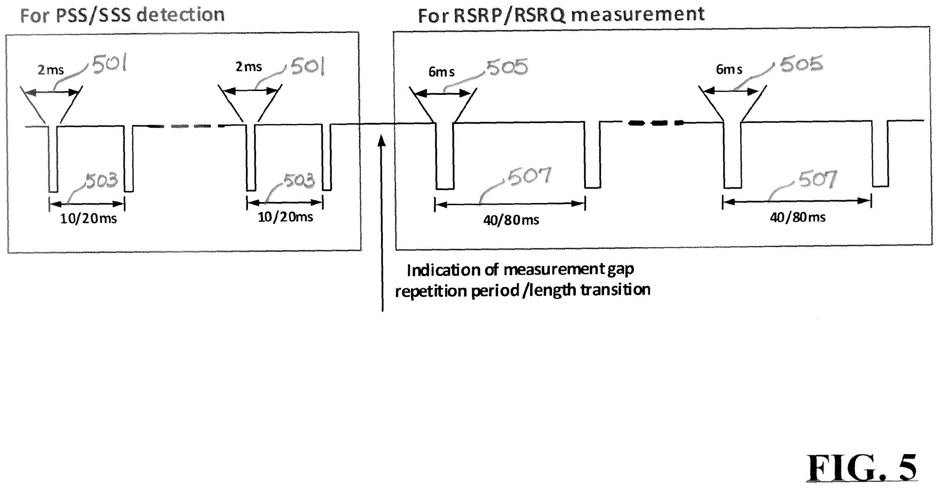

FIG. 5 is a timing diagram illustrating configuration of a measurement gap repetition period and a gap length transition for synchronization signal detection and reference signal measurements according to a set of exemplary embodiments of the present invention. More specifically, the example of FIG. 5 shows that a first gap length 501 and a first MGRP 503 for PSS/SSS detection, as well as a second gap length 505 and a second MGRP 507 for RSRP/RSRQ measurement, may follow a legacy scheme. Illustratively, the first gap length 501 may be 2 ms, the second gap length 505 may be 6 ms, the first MGRP 503 may be 10 or 20 ms, and the second MGRP 507 may be 40 or 80 ms.

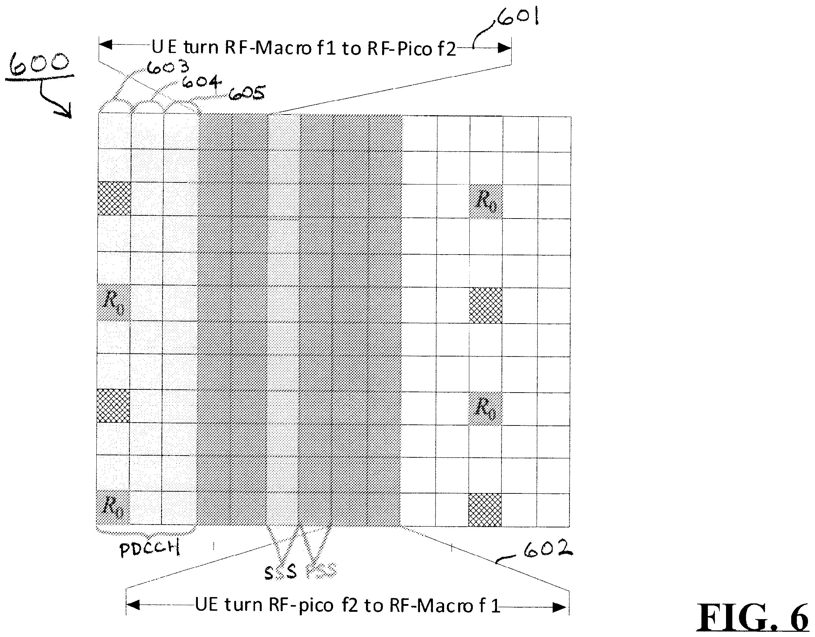

FIG. 6 is a data structure diagram showing user equipment processes in a subframe with any of the switching gaps shown in FIGs. 4 or 5. The example of FIG. 6 illustrates a group of OFDM subframes 600. For purposes of illustration, it is assumed that the Macro cell 104A, 104B (FIG. 2) and small cell are strictly synchronized, and that the UEs 108A, 108B are capable of changing frequencies within 2 OFDM symbols. For example, a UE is switching frequencies from a Macro cell frequency f1 to a picocell frequency f2 at step 601. The UE then switches frequencies from the picocell frequency f2 to the Macro cell frequency f1 at step 602. It is observed that both of these steps take place within 2 OFDM symbols. In this example, the first gap length 401 (FIG. 4) or 501 (FIG. 5) (the gap length used for PSS/SSS detection) may be less than 1ms.

The UE may receive PCFICH/PDCCH/PHICH in the first 1/2/3 OFDM symbols and switch the RF transceiver to detect the PSS/SSS. Returning to FIG. 6, the UE may receive PCFICH/PDCCH/PHICH in the first 3 OFDM symbols 603, 604, 605 and then switch the RF transceiver of the UE to detect the PSS/SSS. Such operation would result in the UE always receiving PDCCH/PHICH and thus there is no need to incur any UL scheduling restriction. Additionally, the UE may receive a command in PDCCH which, for example, specifies power control or another parameter.

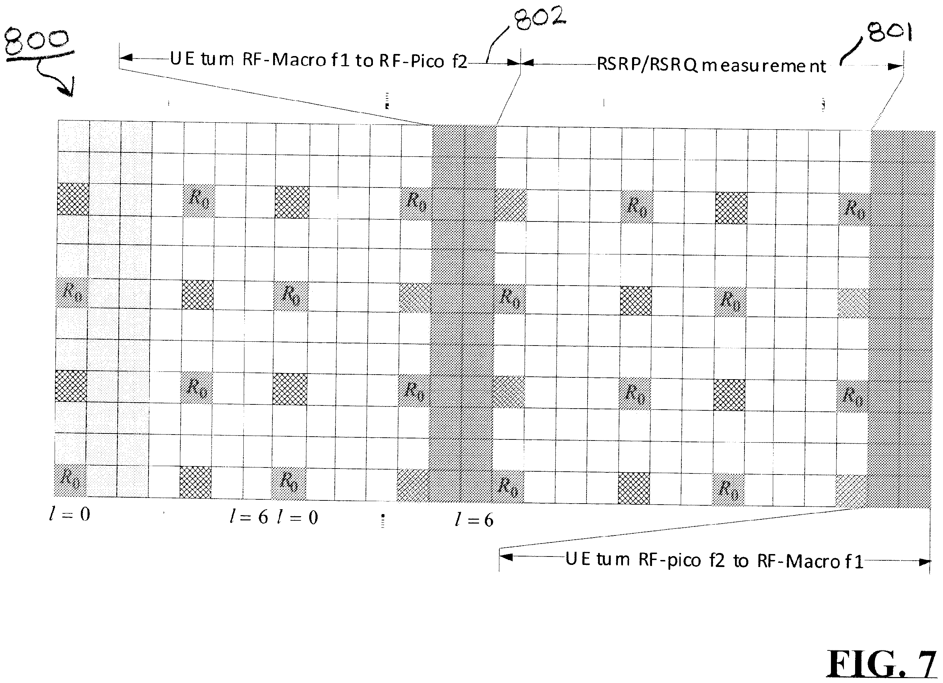

FIG. 7 is a data structure diagram showing user equipment processes in a subframe during reference signal measurements with any of the switching gaps shown in FIGs. 4 or 5. The example of FIG. 7 illustrates a group of OFDM subframes 800 wherein the second gap length 405 (FIG. 4) or 505 (FIG. 5) used for RSRP/RSRQ measurement may be one subframe plus 2 OFDM symbols comprising a current subframe 801 and a time of RF switching 802. (FIG. 7). Thus, the second gap length 405, 505 includes an RF switching time, a measurement period, and time for RF switching back. The second gap length starts from the last 2 OFDM symbols of a former subframe which may be denoted as SF #n-1. The UE will measure RSRP/RSRQ in the current subframe 801 which may be denoted as SF #n after the RF frequency of the UE's transceiver is switched. In this case, the MGRP 407 (FIG. 4) or 507 (FIG. 5) for RSRP/RSRQ measurement may be 5ms, or another value according to agreement on measurement to be discussed for a new carrier type.

The UE follows the PSS/SSS detection configuration as shown in FIG. 6 and performs PSS/SSS detection. The UE then feeds back an indication (e.g. one bit) from a new specific indication channel if a small cell is detected. The feedback just occurs in a fixed subframe of each frame. This indication is also used to indicate the transition from one measurement configuration (i.e., gap repetition period and gap length for PSS/SSS detection) to another measurement configuration (i.e., for RSRP/RSRQ measurement). After feedback of this indication is provided, the UE will assume that the MGRP and gap length is going to be updated for a subsequent RSRP/RSRQ measurement. Then the UE performs this RSPR/RSRQ measurement according to the previously configured gap length 405 (FIG. 4) or 505 (FIG. 5) and MGRP 407 (FIG. 4) or 507 (FIG. 5) specifically designated for RSRP/RSRQ measurement. The eNB modifies the DL/UL scheduling strategy after the eNB receives this indication according to the gap length for RSRP/RSRQ measurement.

Alternatively or additionally, the eNB may separately configure a cell-specific or UE-specific maximum time period for PSS/SSS detection and for RSRP/RSRQ measurement. If the UE does not find any small cell during this time period, it will not perform any more RSRP/RSRQ measurements. In addition, the possibility exists that for one specific carrier, the Macro eNB 102A (FIG. 2) and small cell eNBs are time synchronized, while for the other carrier, they are unsynchronized. Thus, for UEs that need to measure multiple carriers, the eNB may configure measurement settings (the measurement gap length and measurement gap repetition period) for each of the carriers separately.

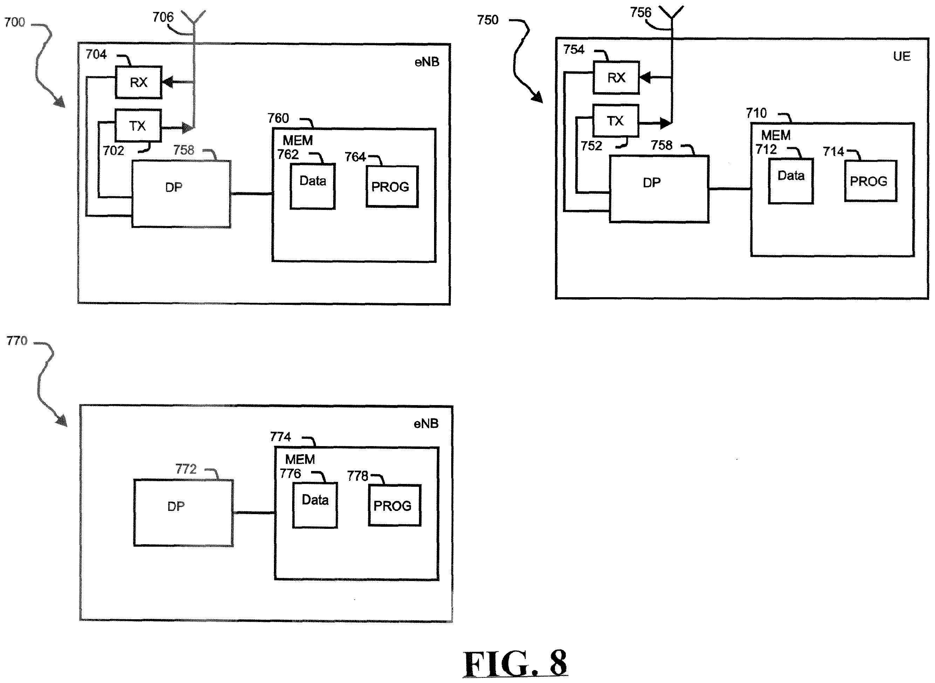

Fig. 8 illustrates details of a base station, implemented as an eNB 700, and a mobile communications device, implemented as a UE 750. The eNB 700 may suitably comprise a transmitter 702, receiver 704, and antenna 706. The eNB 700 may also include a processor 708 and memory 710. The eNB 700 may employ data 712 and programs (PROGS) 714, residing in memory 710.

The eNB 750 may suitably comprise a transmitter 752, receiver 754, and antenna 756. The eNB 750 may also include a processor 758 and memory 760. The eNB 750 may employ data 762 and programs (PROGS) 764, residing in memory 760.

At least one of the PROGs 714 in the eNB 700 is assumed to include a set of program instructions that, when executed by the associated DP 708, enable the device to operate in accordance with the exemplary embodiments of this invention, as detailed above. In these regards the exemplary embodiments of this invention may be implemented at least in part by computer software stored on the MEM 710, which is executable by the DP 708 of the eNB 700, or by hardware, or by a combination of tangibly stored software and hardware (and tangibly stored firmware).

Similarly, at least one of the PROGs 764 in the eNB 750 is assumed to include a set of program instructions that, when executed by the associated DP 758, enable the device to operate in accordance with the exemplary embodiments of this invention, as detailed above. In these regards the exemplary embodiments of this invention may be implemented at least in part by computer software stored on the MEM 760, which is executable by the DP 758 of the eNB 750, or by hardware, or by a combination of tangibly stored software and hardware (and tangibly stored firmware). Electronic devices implementing these aspects of the invention need not be the entire devices as depicted at Figure 1 or Fig. 6 or may be one or more components of same such as the above described tangibly stored software, hardware, firmware and DP, or a system on a chip SOC or an application specific integrated circuit ASIC.

In general, the various embodiments of the UE 750 can include, but are not limited to personal portable digital devices having wireless communication capabilities, including but not limited to cellular telephones, navigation devices, laptop/palmtop/tablet computers, digital cameras and music devices, and Internet appliances.

Various embodiments of the computer readable MEM 710 and 760 include any data storage technology type which is suitable to the local technical environment, including but not limited to semiconductor based memory devices, magnetic memory devices and systems, optical memory devices and systems, fixed memory, removable memory, disc memory, flash memory, DRAM, SRAM, EEPROM and the like. Various embodiments of the DP 08 and 758 include but are not limited to general purpose computers, special purpose computers, microprocessors, digital signal processors (DSPs) and multi-core processors.

Fig. 8 also illustrates a core network element 770, which may, for example, include elements such as an MME. The core network element 770 may suitably comprise a processor 772 and memory 774. The core network element 770 may employ data 776 and programs (PROGS) 778, residing in memory 774.

At least one of the PROGs 778 in the core network element 770 is assumed to include a set of program instructions that, when executed by the associated DP 772, enable the device to operate in accordance with the exemplary embodiments of this invention, as detailed above. In these regards the exemplary embodiments of this invention may be implemented at least in part by computer software stored on the MEM 774, which is executable by the DP 772 of the core network element 770, or by hardware, or by a combination of tangibly stored software and hardware (and tangibly stored firmware). Similarly, at least one of the PROGs 778 in the core network element 770 is assumed to include a set of program instructions that, when executed by the associated DP 772, enable the device to operate in accordance with the exemplary embodiments of this invention, as detailed above.

Electronic devices implementing these aspects of the invention may, but need not, be the entire devices as depicted at FIG. 2. Alternatively or additionally, electronic devices implementing these aspects of the invention may be one or more components of the same such as the above described tangibly stored software, hardware, firmware and DP, or a system on a chip SOC or an application specific integrated circuit ASIC.

Various embodiments of the computer readable MEM 774 include any data storage technology type which is suitable to the local technical environment, including but not limited to semiconductor based memory devices, magnetic memory devices and systems, optical memory devices and systems, fixed memory, removable memory, disc memory, flash memory, DRAM, SRAM, EEPROM and the like. Various embodiments of the DP 772 include but are not limited to general purpose computers, special purpose computers, microprocessors, digital signal processors (DSPs) and multi-core processors.

While various exemplary embodiments have been described above it should be appreciated that the practice of the invention is not limited to the exemplary embodiments shown and discussed here. Various modifications and adaptations to the foregoing exemplary embodiments of this invention may become apparent to those skilled in the relevant arts in view of the foregoing description. It will be further recognized that various blocks discussed above may be performed as steps, but the order in which they are presented is not limiting and they may be performed in any appropriate order with or without additional intervening blocks or steps.

Furthermore, some of the various features of the above non-limiting embodiments may be used to advantage without the corresponding use of other described features. The foregoing description should therefore be considered as merely illustrative of the principles, teachings and exemplary embodiments of this invention, and not in limitation thereof.

## Claims

1. A method performed by a UE and comprising :
receiving, from an eNB, a first measurement setting for synchronization signal detection, and receiving a second measurement setting for radio resource management measurement, wherein the first measurement setting includes a first gap length (401) and a first measurement gap repetition period (403), and the second measurement setting includes a second gap length (405) and a second measurement gap repetition period (407);
performing synchronization detection using the first measurement setting;
in response to an inter-frequency small cell being detected, providing, to the eNB, a feedback indication (411) on an indication channel; and
in response to the inter-frequency small cell being detected, performing radio resource management measurement according to the second measurement setting;
wherein the first gap length (401) is shorter than the second gap length (405).

2. The method of claim 1 further comprising separately configuring: a first time period comprising a cell-specific or a user equipment-specific maximum time period for synchronization detection; and second time period representing a maximum time period for radio resource management measurement.

3. The method of any one of claims 1-2 wherein performing synchronization detection further comprises detecting a cell identifier over a primary synchronization signal or a secondary synchronization signal.

4. The method of any one of claims 1-3 wherein performing radio resource management measurement further comprises measuring at least one of a reference signal receive power or a reference signal receive quality.

5. The method of any one of claims 1-4 the first gap length (401) is less than 6 milliseconds.

6. The method of any one of claims 1-5 wherein the first measurement gap repetition period (403) is shorter than the second measurement gap repetition period (407), and the first measurement gap repetition period (403) is one of 10 milliseconds or 20 milliseconds.

7. The method of any one of claims 1-6 wherein the first gap length (401) and the second gap length (405) are both less than 6 milliseconds.

8. The method of any one of claims 1-7 wherein the first measurement gap repetition period (403) is one of 10 milliseconds and 20 milliseconds, and the second measurement gap repetition period (407) is one of 10 milliseconds and 20 milliseconds.

9. A method performed by an eNB and comprising :
transmitting, to a UE, a first measurement setting for synchronization signal detection and transmitting a second measurement setting for radio resource management measurement, wherein the first measurement setting includes a first gap length (401) and a first measurement gap repetition period (403), and the second measurement setting includes a second gap length (405) and a second measurement gap repetition period (407); and
receiving, from the UE, a feedback indication signal (411) which is provided in response to an inter-frequency small cell being detected;
wherein the first gap length (401) is shorter than the second gap length (405).

10. The method of claim 9 further comprising, in response to the receipt of the feedback indication signal (411), modifying a downlink/uplink scheduling strategy in accordance with the second measurement setting.

11. The method of any one of claims 9-10 for use with a plurality of carriers, the method further comprising separately configuring measurement settings including a gap length and a measurement gap repetition period for each of the plurality of carriers.

12. The method of any one of claims 9-11 wherein the synchronization detection comprises detecting a cell identifier over a primary synchronization signal or a secondary synchronization signal.

13. The method of any one of claims 9-12 wherein the radio resource management measurement comprises measuring at least one of a reference signal receive power or a reference signal receive quality.

14. An apparatus comprising means (700, 750, 770) for performing method according to any of claims 1-8, or 9-13.

15. A computer-readable memory (710, 760, 774) that stores program instructions for performing the method according to any of claims 1-8 or 9-13.

## Patentansprüche

1. Verfahren, das durch ein UE durchgeführt wird und Folgendes umfasst:
Empfangen, von einem eNB, einer ersten Messeinstellung zur Synchronisationssignaldetektion und Empfangen einer zweiten Messeinstellung zur Funkressourcenverwaltungsmessung, wobei die erste Messeinstellung eine erste Lückenlänge (401) und eine erste Messungslückenwiederholungsperiode (403) beinhaltet und die zweite Messeinstellung eine zweite Lückenlänge (405) und eine zweite Messungslückenwiederholungsperiode (407) beinhaltet;
Durchführen einer Synchronisationsdetektion unter Verwendung der ersten Messeinstellung;
als Reaktion darauf, dass eine Inter-Frequenz-Kleinzelle detektiert wird, Bereitstellen, zum eNB, einer Rückmeldungsindikation (411) auf einem Indikationskanal und,
als Reaktion darauf, dass die Inter-Frequenz-Kleinzelle detektiert wird, Durchführen einer Funkressourcenverwaltungsmessung gemäß der zweiten Messeinstellung;
wobei die erste Lückenlänge (401) kürzer als die zweite Lückenlänge (405) ist.

2. Verfahren nach Anspruch 1, das ferner separates Konfigurieren von Folgendem umfasst: einem ersten Zeitraum, der einen zellspezifischen oder einen benutzergerätespezifischen Maximalzeitraum zur Synchronisationsdetektion umfasst; und einem zweiten Zeitraum, der einen Maximalzeitraum zur Funkressourcenverwaltungsmessung repräsentiert.

3. Verfahren nach einem der Ansprüche 1-2, wobei das Durchführen einer Synchronisationsdetektion ferner ein Detektieren einer Zellkennung über ein primäres Synchronisationssignal oder ein sekundäres Synchronisationssignal umfasst.

4. Verfahren nach einem der Ansprüche 1-3, wobei das Durchführen einer Funkressourcenverwaltungsmessung ferner ein Messen einer Referenzsignal-Empfangsleistung und/oder einer Referenzsignal-Empfangsqualität umfasst.

5. Verfahren nach einem der Ansprüche 1-4, wobei die erste Lückenlänge (401) weniger als 6 Millisekunden beträgt.

6. Verfahren nach einem der Ansprüche 1-5, wobei die erste Messungslückenwiederholungsperiode (403) kürzer als die zweite Messungslückenwiederholungsperiode (407) ist und die erste Messungslückenwiederholungsperiode (403) 10 Millisekunden oder 20 Millisekunden beträgt.

7. Verfahren nach einem der Ansprüche 1-6, wobei die erste Lückenlänge (401) und die zweite Lückenlänge (405) beide weniger als 6 Millisekunden betragen.

8. Verfahren nach einem der Ansprüche 1-7, wobei die erste Messungslückenwiederholungsperiode (403) 10 Millisekunden oder 20 Millisekunden beträgt und die zweite Messungslückenwiederholungsperiode (407) 10 Millisekunden oder 20 Millisekunden beträgt.

9. Verfahren, das durch einen eNB durchgeführt wird und Folgendes umfasst:
Übertragen, zu einem UE, einer ersten Messeinstellung zur Synchronisationssignaldetektion und Übertragen einer zweiten Messeinstellung zur Funkressourcenverwaltungsmessung, wobei die erste Messeinstellung eine erste Lückenlänge (401) und
eine erste Messungslückenwiederholungsperiode (403) beinhaltet und die zweite Messeinstellung eine zweite Lückenlänge (405) und eine zweite Messungslückenwiederholungsperiode (407) beinhaltet; und
Empfangen, vom UE, eines Rückmeldungsindikationssignals (411), das als Reaktion darauf bereitgestellt wird, dass eine Inter-Frequenz-Kleinzelle detektiert wird;
wobei die erste Lückenlänge (401) kürzer als die zweite Lückenlänge (405) ist.

10. Verfahren nach Anspruch 9, das ferner als Reaktion auf den Empfang des Rückmeldungsindikationssignals (411) Modifizieren einer Abwärtsstrecken-/Aufwärtsstrecken-Scheduling-Strategie gemäß der zweiten Messeinstellung umfasst.

11. Verfahren nach einem der Ansprüche 9-10 zur Verwendung mit mehreren Trägern, wobei das Verfahren ferner ein separates Konfigurieren von Messeinstellungen umfasst, die eine Lückenlänge und eine Messungslückenwiederholungsperiode für jeden der mehreren Träger beinhalten.

12. Verfahren nach einem der Ansprüche 9-11, wobei die Synchronisationsdetektion ein Detektieren einer Zellkennung über ein primäres Synchronisationssignal oder ein sekundäres Synchronisationssignal umfasst.

13. Verfahren nach einem der Ansprüche 9-12, wobei die Funkressourcenverwaltungsmessung ein Messen einer Referenzsignal-Empfangsleistung und/oder einer Referenzsignal-Empfangsqualität umfasst.

14. Vorrichtung, die Mittel (700, 750, 770) zum Durchführen des Verfahrens nach einem der Ansprüche 1-8 oder 9-13 umfasst.

15. Computerlesbarer Speicher (710, 760, 774), der Programmanweisungen zum Durchführen des Verfahrens nach einem der Ansprüche 1-8 oder 9-13 speichert.

## Revendications

1. Procédé réalisé par un équipement utilisateur (UE) et consistant :
à recevoir, d'un noeud B évolué (eNB), un premier paramètre de mesure pour une détection de signal de synchronisation et
à recevoir un second paramètre de mesure pour une mesure de gestion de ressources radio,
dans lequel le premier paramètre de mesure comprend une première longueur d'intervalle (401) et une première période de répétition d'intervalle de mesure (403) et le second paramètre de mesure comprend une seconde longueur d'intervalle (405) et une seconde période de répétition d'intervalle de mesure (407) ;
à réaliser une détection de synchronisation à l'aide du premier paramètre de mesure ;
à la suite de la détection d'une petite cellule inter-fréquence, à fournir, au noeud eNB, une indication de rétroaction (411) sur un canal d'indication ; et
à la suite de la détection d'une petite cellule inter-fréquence, à réaliser une mesure de gestion de ressources radio en fonction du second paramètre de mesure ;
dans lequel la première longueur d'intervalle (401) est plus courte que la seconde longueur d'intervalle (405).

2. Procédé selon la revendication 1, consistant en outre à configurer de façon séparée : une première période de temps comprenant une période de temps maximale spécifique à une cellule ou spécifique à un équipement utilisateur pour une détection de synchronisation ; et une seconde période de temps représentant une période de temps maximale pour une mesure de gestion de ressources radio.

3. Procédé selon l'une quelconque des revendications 1 à 2, dans lequel la réalisation d'une détection de synchronisation consiste en outre à détecter un identifiant de cellule sur un signal de synchronisation primaire ou sur un signal de synchronisation secondaire.

4. Procédé selon l'une quelconque des revendications 1 à 3, dans lequel la réalisation d'une mesure de gestion de ressources radio consiste en outre à mesurer une puissance de réception de signal de référence et/ou une qualité de réception de signal de référence.

5. Procédé selon l'une quelconque des revendications 1 à 4, dans lequel la première longueur d'intervalle (401) est inférieure à 6 millisecondes.

6. Procédé selon l'une quelconque des revendications 1 à 5, dans lequel la première période de répétition d'intervalle de mesure (403) est plus courte que la seconde période de répétition d'intervalle de mesure (407) et la première période de répétition d'intervalle de mesure (403) fait soit 10 millisecondes, soit 20 millisecondes.

7. Procédé selon l'une quelconque des revendications 1 à 6, dans lequel la première longueur d'intervalle (401) et la seconde longueur d'intervalle (405) sont l'une et l'autre inférieures à 6 millisecondes.

8. Procédé selon l'une quelconque des revendications 1 à 7, dans lequel la première période de répétition d'intervalle de mesure (403) fait soit 10 millisecondes, soit 20 millisecondes et la seconde période de répétition d'intervalle de mesure (407) fait soit 10 millisecondes, soit 20 millisecondes.

9. Procédé réalisé par un noeud eNB et consistant :
à transmettre, à un équipement utilisateur, un premier paramètre de mesure pour une détection de signal de synchronisation et
à transmettre un second paramètre de mesure pour une mesure de gestion de ressources radio,
dans lequel le premier paramètre de mesure comprend une première longueur d'intervalle (401) et une première période de répétition d'intervalle de mesure (403) et le second paramètre de mesure comprend une seconde longueur d'intervalle (405) et une seconde période de répétition d'intervalle de mesure (407) ; et
à recevoir, de l'équipement utilisateur, un signal d'indication de rétroaction (411) qui est fourni à la suite de la détection d'une petite cellule inter-fréquence ;
dans lequel la première longueur d'intervalle (401) est plus courte que la seconde longueur d'intervalle (405).

10. Procédé selon la revendication 9, consistant en outre, à la suite de la réception du signal d'indication de rétroaction (411), à modifier une stratégie de planification de liaison descendante/liaison montante en fonction du second paramètre de mesure.

11. Procédé selon l'une quelconque des revendications 9 à 10, destiné à être utilisé avec une pluralité de porteuses, le procédé consistant en outre à configurer de façon séparée des paramètres de mesure comprenant une longueur d'intervalle et une période de répétition d'intervalle de mesure pour chaque porteuse de la pluralité de porteuses.

12. Procédé selon l'une quelconque des revendications 9 à 11, dans lequel la détection de synchronisation consiste à détecter un identifiant de cellule sur un signal de synchronisation primaire ou sur un signal de synchronisation secondaire.

13. Procédé selon l'une quelconque des revendications 9 à 12, dans lequel la mesure de gestion de ressources radio consiste à mesurer une puissance de réception de signal de référence et/ou une qualité de réception de signal de référence.

14. Appareil comprenant des moyens (700, 750, 770) pour réaliser un procédé selon l'une quelconque des revendication 1 à 8 ou 9 à 13.

15. Mémoire lisible par ordinateur (710, 760, 774) qui stocke des instructions de programme pour réaliser le procédé selon l'une quelconque des revendication 1 à 8 ou 9 à 13.
